# EUROPEAN PATENT SPECIFICATION

(11) **EP 2 708 106 B1**
(45) Date of publication and mention of the grant of the patent: **05.08.2015**
(21) Application number: 12184893.1
(22) Date of filing: 18.09.2012
(51) Int. Cl.: A01D 34/82, A01D 75/20

(54) **An agricultural mower**
Landwirtschaftsmäher
Faucheuse agricole

(43) Date of publication of application: 19.03.2014
(73) Proprietor: Kverneland A/S, 4355 Kvernaland (NO)
(72) Inventor: Joosten, Stefanus Franciscus Wilhelmus, 5644J1 Eindhoven (NL)
(74) Representative: Bittner, Thomas L.

(56) References cited:
- EP-B1- 1 661 449
- DE-U1-202010 012 789
- DE-U1-202011 101 223
- US-A- 3 031 836
- US-A- 3 570 225
- US-A- 5 924 205

## Description

The present disclosure refers to an agricultural mower.

### Background

Agricultural mowers can be of the rotating disk or drum type, in which a number of disk or drums are spaced apart along a cutter bar which extends generally perpendicular to the mowing direction. Such cutter bars have been utilized in agricultural harvesting implements for many years. Each cutter bar includes a plurality of transversely spaced disk cutters or drum cutters which are referred to as cutting units driven for rotation about a generally vertical axis. Each disk cutter may have two or three knifes pivotally mounted on the periphery thereof to sever standing crop from the ground trough an impact action. Agricultural mowers can also be of the linearly reciprocating cutter blade type. Also, they can be of the horizontal axle flail-type.

At least when the cutting unit bar is lowered to the operative position, there is need for providing a protection mechanism at the distal end of the cutter bar to keep objects away from the rotating end cutting unit member. Therefore, the different types of agricultural mower are required to have some form of protective cover which overlies the mowing device. In addition, a depending flexible curtain may be provided which extends downwardly from the cover.

Document EP 1 661 449 B1 discloses an agricultural mower having a support frame, means for attaching the support frame to a propelling vehicle, at least one mowing device mounted on the support frame, a cover overlying at least part of the mowing device, and a flexible curtain depending from at least part of the outer periphery of the cover so as partly to surround the mowing device. The cover comprises an assembly of upper and lower protective sheets which are spaced apart from each other and which are connected together along to the post edge regions. In case of an impact a peripheral of the cover or the cover as whole is pivoted downwards.

Document DE 20 2011 101 223 U1 discloses an agricultural mower according to the preamble of claim 1, provided with a cover overlying the mowing device, and a flexible curtain depending from the outer periphery of the cover. Along the outer periphery of the cover a protection element is extending. The protection element is flexible and bendable. Also, the protection element, in response to an impact, deforms elastically. The flexible curtain is attached to a basic member fixed to an end of the cover bended downwards.

In document EP 0 706 750 B1 a safety device is disclosed for a protective cover in an agricultural machine. A protection device of an agricultural machine for performing crop processing is disclosed in EP 1 369 024 B1.

A protection device for an agricultural mower of the rotating cutter disk or drum type is described in DE 20 2010 012 789 U1. A safety bar attached to elastic elements is proposed.

Document US 5,727,371 discloses an agricultural machine used for cutting vegetables. A stop element is provided which prevents movement of parts of a protection device into a non-operating position when the cutting mechanism is located in the working position, and which allows movement when the cutting mechanism is located in a different position. The activation of the stop element is accomplished automatically by means of an activation element when the cutting mechanism is brought from the other position into the work position.

Document US 5,761,890 refers to a disk mower incorporating a modular disk cutter bar.

### Summary

It is an object of the invention to provide an agricultural mower with a protective cover having improved operation characteristics.

An agricultural mower according to the independent claim 1 is provided. Advantageous embodiments are disclosed in the dependent claims.

According to one aspect of the present disclosure, an agricultural mower is provided, comprising a support frame, means for attaching the support frame to a drive vehicle, a mowing device attached to the support frame, a cover overlying at least part of the mowing device, a flexible curtain depending from at least part of the outer periphery of the cover so as partly to surround the moving device, and a protection element attached to the cover and extending along at least part of the outer periphery of the cover. The protection element may be extending on a side of the agricultural mower distant to the drive vehicle. Also, the protection element may be extending along a front side and / or a backside of the agricultural mower. It may even be provided along all sides of the agricultural mower not facing towards the drive vehicle.

The protection element is provided with a compressible element, the compressible element being compressible inwardly and extending along the outer periphery of at least part of the protection element. The compressible element may be compressible inwards in a horizontal direction, at least when the agricultural mower is in a working position. The flexible curtain is attached to the compressible element, the flexible curtain, thereby, being configured to be forcibly moved inwards when the compressible element, in response to an external impact acting on the compressible element, is compressed inwardly. If the compressible element, in response to the impact, is compressed in the horizontal direction, the flexible curtain is forced to relocate horizontally. The compressible element may be extending on the side of the agricultural mower distant to the drive vehicle. Also, the compressible element may be extending along the front side and / or the backside of the agricultural mower. It may even be provided along all sides of the agricultural mower not facing towards the drive vehicle.

The compressible element may be configured to be compressed in a direction essentially parallel to a general plane of the cover. In such case, also the flexible curtain, due to impact caused compression of the compressible element, will be moved inwardly in the direction essentially parallel to the general plane of the cover. At least in the working position, the plane of the cover may be extending horizontally.

For operation the agricultural mower is attached to a drive vehicle, e.g. a tractor, which will provide a driving force for the mowing device. The agricultural mower may be attached to a front or to side part of the drive vehicle. Therefore, the mower may be referred to as a front mower and a side mower, respectively. It may be provided that the agricultural mower is moveable between the work position and one or more other positions when attached to the drive vehicle. In an embodiment, the working position may also be referred to as cutting position. For example, relocation between the different positions may be done by pivoting the agricultural mower between the different positions. In the work position, the general plane of the cover may be extending essentially horizontal. The flexible curtain which may also referred to as tarpaulin will be extending vertically, at least in the work position of the agricultural mower.

In case of an external impact on the compressible element, it is compressed inwards, e.g. in the direction essentially parallel to the general plane of the cover, which in an embodiment may be the horizontal direction in the work position of the agricultural mower. In consequence, independent of the specific direction of the compression of the compressible element, the flexible curtain will also be moved inwardly, since it is received on the compressible element. Such forced movement or relocation of the flexible curtain supports keeping the essential vertical orientation of the flexible curtain when the flexible curtain is moved inwardly due to the impact acting on the compressible element. It is essentially avoided that the flexible curtain is moved downwards due to the impact which, as it is the case for prior art devices, could lead to relocation of the flexible curtain in the direction to the mowing device, thereby, causing the risk of damage to the flexible curtain.

The flexible curtain may be detachably mounted to the compressible element.

According to an aspect, the compressible element comprises an inner member attached to a fixed support and at least one outer member, the at least one outer member being located outwards from the inner member and displaceable in relation to the inner member, in response to the external impact, for compression of the compressible element, and the flexible curtain being attached to the at least one outer member. The at least one outer member may be attached displaceable or moveable inwards in the direction essentially parallel to the general plane of the cover. The fixed support to which the inner member of the compressible element is attached may be provided by this support frame and / or a part of the cover. E.g., an edge of the cover may be bended for providing the fixed support for the inner member. Due to the attachment of the flexible curtain of the at least one outer member, the flexible curtain will be forced to follow displacement of the at least one outer member due to the external impact.

The compressible element may comprise at least one member having an S-form in cross section. As an alternative to or in combination with the S-form, the at least one member may be provided with a W-, U-, and / or Z-form in cross section. A middle part of the at least one member may be connected to side parts pivotably attached to the middle part. The at lease one member having the S-form in cross section may be one of the outside members of the compressible element.

The compressible element may comprise at least one open space, the at least one open space being compressible in response to the external impact acting on the compressible element. The at least one open space may be extending along the periphery line of the cover. There may be open spaces corresponding to each other, thereby, providing corresponding spaces. For example, corresponding open spaces are provided by having at least in part a common wall which may lead to a common change of space due to the external impact.

The compressible element may comprise at least one of an open space opening to the top side and an open space opening to the bottom side. There may be adjacent open spaces providing an arrangement of corresponding open spaces where one opening is to the top side and the opening of the adjacent open space is to the bottom side. An outer open space may be extending adjacent to a peripheral member of the compressible element. For example, due to the external impact the peripheral member of the compressible element may be pivotable into the adjacent outer open space.

The periphery end of the cover at least in part may be overlying the protection element. Thereby, the cover may be overlying at least part of the compressible element. The cover may provide a closing for at least one of the open spaces open to the top side. The cover may be bendable upwards for moving an edge of the cover out of the overlying position, for example, for inspection of the mowing device located underneath the cover.

A periphery end of the cover may be received in recess provided on the protection element. By locating the periphery end of the cover in recess a flat top surface may be provided. The recess may be provided on the compressible element.

The compressible element may be extending in at least part of one or more corner sections of the outer periphery of the cover. Usually, the corner sections of the outer periphery of the cover correspond to the corner sections of the protection element.

According to an aspect, the compressible element may be provided with different functional forms in cross section depending on the location along the outer periphery of the cover. The different functional forms in cross section may be distinguished by being provided with a different number of members, members having different orientations (e.g. horizontal or vertical), and / or members having different thickness. The different functional forms are provided in different locations along the outer periphery of the cover. For example, different impact absorption may be implemented by the different functional forms of the compressible element. A higher or lower flexible absorption may be provided in different locations along the outer periphery of the cover.

In one embodiment, the compressible element may be a resilient element. By the resilience of the compressible element an elastic compression behavior may be provided.

### Preferred embodiments

Preferred embodiments will be described in further detail, by way of example only, with reference to the accompanying drawings. In the figures, show
- Fig. 1: a plane view of one end of a set of rotatable mower cutting units, provided with a protective cover assembly,
- Fig. 2: a perspective view of a part of the assembly in Fig. 1,
- Fig. 3: a perspective view of a protection element provided with a compressible element,
- Fig. 4: views of a cross section of the compressible element in different locations indicated in Fig. 2,
- Fig. 5: a schematic view of the compressible element in cross section for describing an impact effect on the compressible element,
- Fig. 6: a schematic plane view of a protective cover assembly for explaining the effect of the external impact, and
- Fig. 7: a view of an end section of the protection element in Fig. 3.

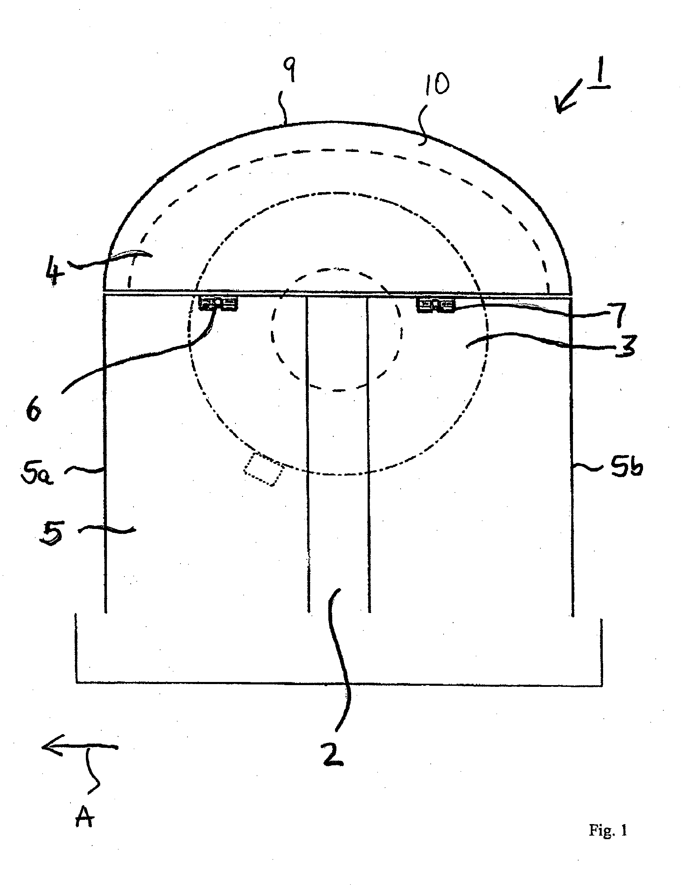

Referring to the drawings, an agricultural mower is designated generally by reference 1. The agricultural mower 1 is provided with a support frame 2 which is provided with means (not shown) for attaching the support frame 2 to a drive vehicle having propelling means, e.g. a tractor. At least one mowing device 3 is mounted to the support frame 2. The support frame 2 schematically depicted in Fig. 1 may be provided with an assembly of support frame members directly or indirectly supporting or receiving one or more members of the agricultural mower. The illustrated mowing device 3 may be an outer most mowing unit of a set of mower units extending transversally of a mowing direction which is designated in Fig. 1 by an arrow A.

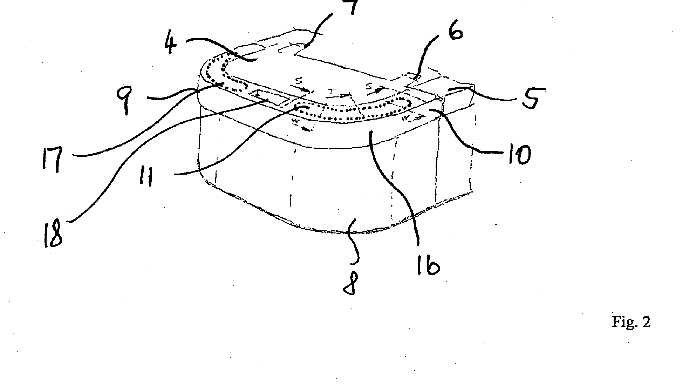

A cover 4 overlies at least part of the mowing device 3. The cover 4, in the embodiment shown in Fig. 1 and 2, is pivotally received on a further cover 5 also overlying part of the mowing device 3. Connecting means 6, 7 are provided for attaching the cover 4 to further cover 5. The combination of the cover 4 and the further cover 5 may be referred to as a cover assembly.

Referring to Fig. 2, a flexible curtain 8 depends from at least part of the outer periphery 9 of the cover 4 so as partly to surround the mowing device 3.

The cover 4 comprises a protection element 10 provided with a compressible element 11 extending at least part along the protection element 10. In an embodiment not shown, the protection element 10 may also be extending along at least part of a front side 5a and / or a back side 5b of the further cover 5.

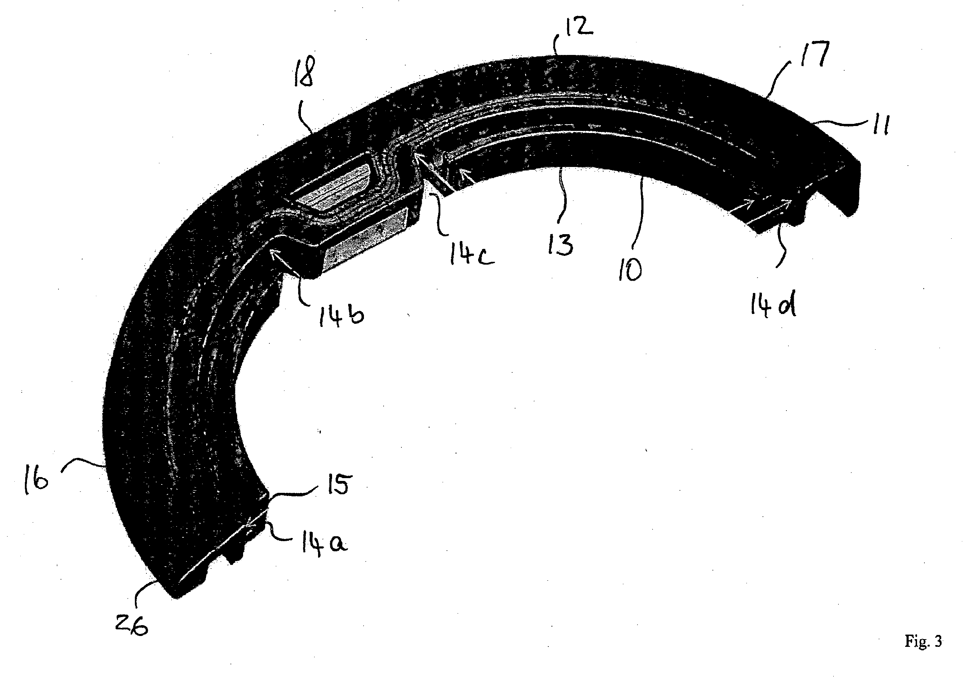

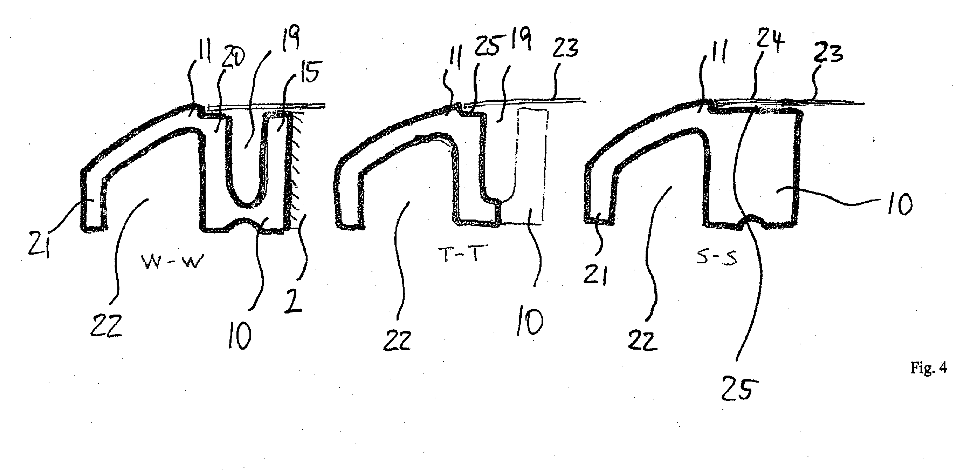

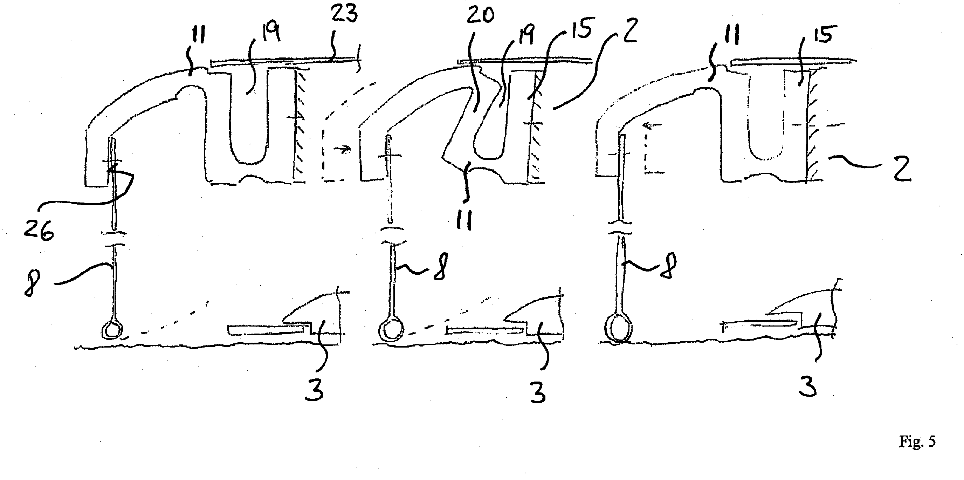

Fig. 3 shows a perspective view of the protection element 10 provided with the compressible element 11 extending along at least part of the outer periphery 12 of the protection element 10. On an inner side 13 the protection element 10 is provided with inside gaps 14a, ..., 14d which may be used for attaching the protection element 10 to the support frame 2 and / or the covers 4, 5. As best seen in Fig. 4 and 5, in inner member 15 of the protection element 10 may be received on the support frame 2 when the protection element 10 is attached to the support frame 2.

Referring to Fig. 2 to 5, the compressible element 11 is provided with local constructions different in cross section in corner sections 16, 17 and a middle section 18, respectively. Fig. 4 shows the protection element 10 in cross section at different locations indicated in Fig. 2. The inner member 15 is fixed to the support frame 2 (see cross section W-W in Fig. 4). Adjacent to the inner member 15 an inner open space 19 is provided between the inner member 15 and a middle member 20. The inner open space 19 is open to the top. Between the middle member 20 and an outer member 21 an outer open space 22 is provided which is open to the bottom. According to Fig. 4, the inner open space 19 is missing in the cross section S-S.

As can be seen from Fig. 4 and 5, a top cover element 23 is partly overlying the protection element 10. An outer periphery 24 of the top cover 23 is received in a recess 25 provided on the protection element 10.

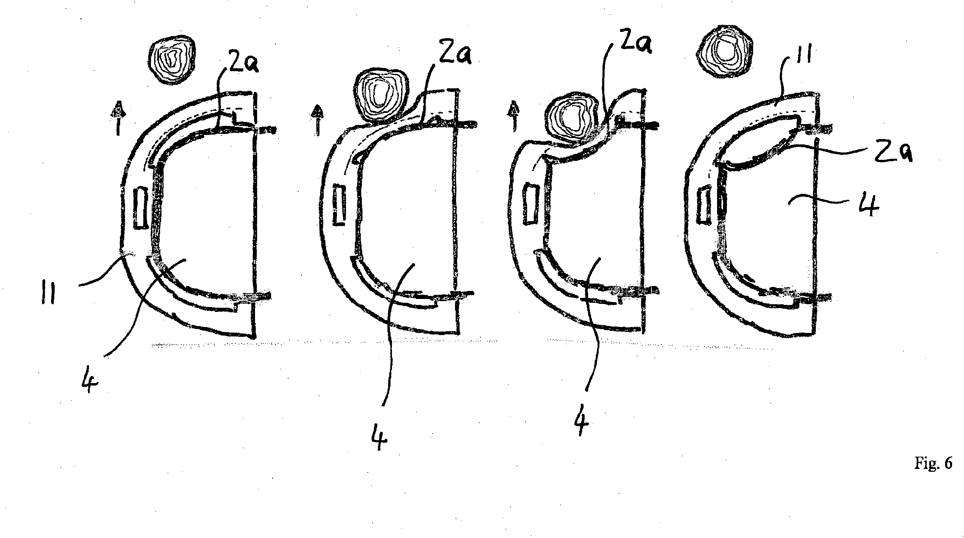

Referring to Fig. 5, compression of the compressible element 11 in response to an external impact acting on the protection element 10 is schematically shown. Due to the impact the middle member 20 is pivoted into the inner open space 19. Also, the middle member 20 is pivoted relative to the outer member 21 which is resulting in a horizontal relocation of the outer member 21 and the flexible curtain 8 which is attached to the outer member 21 on an inner side 26. Such relocation in direction essentially follows a general plane of the top cover 23. According to the drawing on the right hand side in Fig. 5, when the impact is finished, the compressible element 11 is taking its expended position again. Therefore, there is flexible or elastic compression of the compressible element 11 as schematically depicted in Fig. 5. Such effect can also be seen in Fig. 6 which is showing a schematic plane view of the cover 4 and its behavior due to an external impact. In this specific embodiment, after the impact the protection element 10 as whole goes back into its original position, but not a support frame member frame 2a.

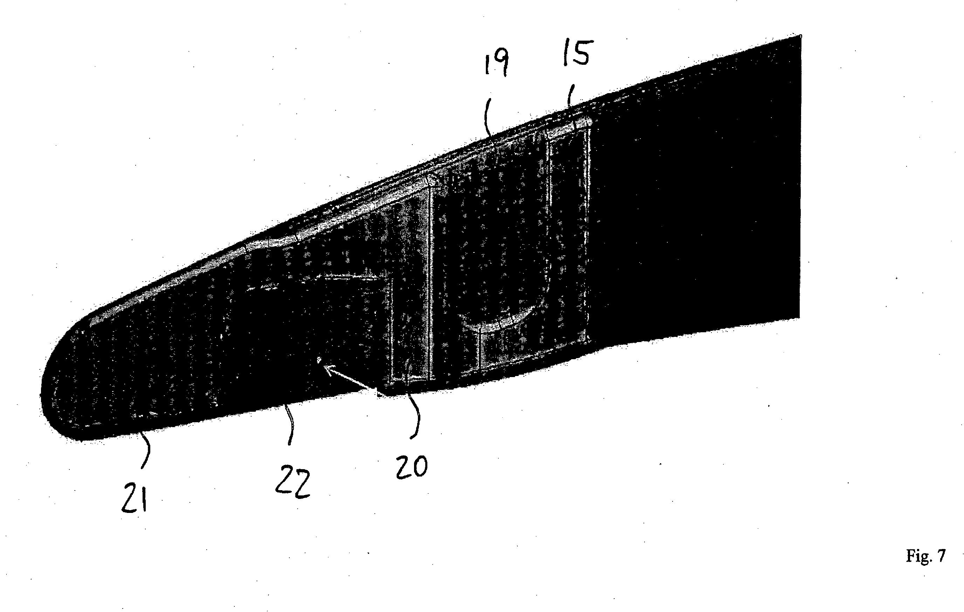

Fig. 7 shows in greater detail an end section 26 of the protection element 10 in Fig. 3.

The features disclosed in this specification, the figures and / or the claims may be material for the realization of the various embodiments, taken in isolation or in various combinations thereof.

## Claims

1. An agricultural mower, comprising:
- a support frame (2),
- means for attaching the support frame to a drive vehicle,
- a mowing device (3) attached to the support frame (2),
- a cover (4) overlying at least part of the mowing device (3),
- a flexible curtain (8) depending from at least part of the outer periphery of the cover (4) so as partly to surround the moving device (3), and
- a protection element attached to the cover and extending along at least part of the outer periphery of the cover,
wherein the protection element (10) is provided with a compressible element (11), the compressible element (11) being compressible inwardly and extending along at least part of the protection element (10), and **characterized in that** the flexible curtain (8) is attached to the compressible element (11), the flexible curtain (8), thereby, being configured to be forcibly moved inwards when the compressible element (11), in response to an external impact acting on the compressible element (11), is compressed inwardly.

2. Mower according to claim 1, wherein the compressible element (11) comprises an inner member (15) attached to a fixed support (2) and at least one outer member (21), the at least one outer member (21) being located outwards from the inner member (15) and displaceable in relation to the inner member (15), in response to the external impact, for compression of the compressible element (11), and the flexible curtain (8) being attached to the at least one outer member (21).

3. Mower according to claim 1 or 2, wherein the compressible element (11) comprises at least one member having an S-form in cross section.

4. Mower according to at least one of the preceding claims, wherein the compressible element (11) comprises at least one open space (19; 22), the at least one open space (19; 22) being compressible in response to the external impact.

5. Mower according to claim 4, wherein the compressible element (11) comprises at least one of an open space (19) opening to the top side and an open space (22) opening to the bottom side.

6. Mower according to at least one of the preceding claims, wherein a periphery end (23) of the cover at least in part is overlying the protection element (10).

7. Mower according to claim 6, wherein the periphery end (23) of the cover is received in recess (25) provided on the protection element (10).

8. Mower according to at least one of the preceding claims, wherein the compressible element (11) is extending in at least part of one or more corner sections (16; 17) of the outer periphery of the cover (4).

9. Mower according to at least one of the preceding claims, wherein the compressible element (11) is provided with different functional forms in cross section depending on the location along the outer periphery of the cover (4).

10. Mower according to at least one of the preceding claims, wherein the compressible element (11) is a resilient element.

## Patentansprüche

1. Landwirtschaftlicher Mäher, mit:
- einen Tragrahmen (2),
- Mittel zum Befestigen des Tragrahmens an einem Antriebsfahrzeug,
- eine Mähvorrichtung (3), welche am Tragrahmen (2) angeordnet ist,
- eine Abdeckung (4), welche wenigstens über einem Teil der Mähvorrichtung (3) liegt,
- eine flexible Schürze (8), welche von wenigstens einem Teil des äußeren Umfangs der Abdeckung (4) herabhängt, um so teilweise die Mähvorrichtung (3) zu umgeben, und
- ein Schutzelement, welches an der Abdeckung angeordnet ist und sich entlang wenigstens eines Teils des äußeren Umfangs der Abdeckung erstreckt,
wobei das Schutzelement (10) mit einem zusammendrückbaren Element (11) gebildet ist, wobei das zusammendrückbare Element (11) nach innen zusammendrückbar ist und sich entlang wenigstens eines Teils des Schutzelements (10) erstreckt, und **dadurch gekennzeichnet ist, dass** die flexible Schürze (8) am zusammendrückbaren Element (11) angebracht ist, wobei die flexible Schürze (8) konfiguriert ist, um mit Kraft nach innen bewegt zu werden, wenn das zusammendrückbare Element (11) als Reaktion auf einen äußeren Aufprall, der auf das zusammendrückbare Element (11) wirkt, nach innen zusammengedrückt wird.

2. Mäher nach Anspruch 1, wobei das zusammendrückbare Element (11) ein inneres Element (15), welches an einer feststehenden Stütze (2) angeordnet ist, und wenigstens ein äußeres Element (21) aufweist, wobei das wenigstens eine äußere Element (21) außerhalb des inneren Elements (15) angeordnet ist und in Bezug auf das innere Element (15) als Reaktion auf den äußerlichen Aufprall zum Zusammendrücken des zusammendrückbaren Elements (11) verschiebbar ist und wobei die flexible Schürze (8) an dem wenigstens einen äußeren Element (21) angeordnet ist.

3. Mäher nach Anspruch 1 oder 2, wobei das zusammendrückbare Element (11) wenigstens ein Element mit einer S-Form im Querschnitt aufweist.

4. Mäher nach wenigstens einem der vorangehenden Ansprüche, wobei das zusammendrückbare Element (11) wenigstens einen offenen Raum (19; 22) aufweist, wobei der wenigstens eine offene Raum (19; 22) als Reaktion auf den äußeren Aufprall zusammendrückbar ist.

5. Mäher nach Anspruch 4, wobei das zusammendrückbare Element (11) wenigstens einen offenen Raum (19) aufweist, welcher sich zur Oberseite hin öffnet, und einen offenen Raum (22) aufweist, welcher sich zur Bodenseite hin öffnet.

6. Mäher nach wenigstens einem der vorangehenden Ansprüche, wobei ein Umfangsende (23) der Abdeckung wenigstens teilweise über dem Schutzelement (10) zu liegen kommt.

7. Mäher nach Anspruch 6, wobei das Umfangsende (23) der Abdeckung in der Vertiefung (25), welche auf dem Schutzelement (10) vorgesehen ist, aufgenommen ist.

8. Mäher nach wenigstens einem der vorangehenden Ansprüche, wobei das zusammendrückbare Element (11) sich in wenigstens einen Teil von einem oder mehreren Eckabschnitten (16; 17) des äußeren Umfangs der Abdeckung (4) erstreckt.

9. Mäher nach wenigstens einem der vorangehenden Ansprüche, wobei das zusammendrückbare Element (11) mit unterschiedlichen funktionalen Formen im Querschnitt in Abhängigkeit von der Stelle entlang des äußeren Umfangs der Abdeckung (4) gebildet ist.

10. Mäher nach wenigstens einem der vorangehenden Ansprüche, wobei das zusammendrückbare Element (11) ein elastisches Element ist.

## Revendications

1. Faucheuse agricole comprenant :
- un châssis de support (2),
- un moyen pour fixer le châssis de support à un véhicule d'entraînement,
- un dispositif de fauchage (3) fixé au châssis de support (2),
- un capot (4) recouvrant au moins une partie du dispositif de fauchage (3),
- un rideau souple (8) dépendant d'au moins une partie de la périphérie extérieure du capot (4) de manière à entourer partiellement le dispositif de fauchage (3), et
- un élément de protection fixé au capot et s'étendant le long d'au moins une partie de la périphérie extérieure du capot,
dans lequel l'élément de protection (10) est muni d'un élément compressible (11), ledit élément compressible (11) étant compressible vers l'intérieur et s'étendant le long d'au moins une partie de l'élément de protection (10), et **caractérisé en ce que** le rideau souple (8) est fixé à l'élément compressible (11), le rideau souple (8) étant de ce fait configuré pour être déplacé par force vers l'intérieur lorsque l'élément compressible (11) est comprimé vers l'intérieur, en réaction à un choc externe agissant sur l'élément compressible (11).

2. Faucheuse selon la revendication 1, dans laquelle l'élément compressible (11) comprend un élément intérieur (15) fixé à un support fixe (2) et au moins un élément extérieur (21), ledit au moins un élément extérieur (21) étant situé extérieurement à l'élément intérieur (15) et pouvant être déplacé par rapport à l'élément intérieur (15), en réaction au choc extérieur, pour compression de l'élément compressible (11) et le rideau souple (8) étant fixé à au moins un élément extérieur (21).

3. Faucheuse selon la revendication 1 ou 2, dans laquelle l'élément compressible (11) comprend au moins un élément ayant une forme en "S" dans la section transversale.

4. Faucheuse selon au moins l'une quelconque des revendications précédentes, dans laquelle l'élément compressible (11) comprend au moins un espace ouvert (19 ; 22), ledit au moins un espace ouvert (19 ; 22) étant compressible en réaction au choc externe.

5. Faucheuse selon la revendication 4, dans laquelle l'élément compressible (11) comprend au moins un espace ouvert (19) s'ouvrant sur le côté supérieur et un espace ouvert (22) s'ouvrant sur le fond.

6. Faucheuse selon au moins l'une quelconque des revendications précédentes, dans laquelle une extrémité périphérique (23) du capot recouvre au moins en partie l'élément de protection (10).

7. Faucheuse selon la revendication 6, dans laquelle l'extrémité périphérique (23) du capot est reçue dans un évidement (25) aménagé sur l'élément de protection (10).

8. Faucheuse selon au moins l'une quelconque des revendications précédentes, dans laquelle l'élément compressible (11) s'étend dans au moins une partie d'une ou plusieurs sections de coin (16 ; 17) de la périphérie extérieure du capot (4).

9. Faucheuse selon au moins l'une quelconque des revendications précédentes, dans laquelle l'élément compressible (11) est doté de différentes formes fonctionnelles dans la section transversale en fonction de l'emplacement le long de la périphérie extérieure du capot (4).

10. Faucheuse selon au moins l'une quelconque des revendications précédentes, dans laquelle l'élément compressible (11) est un élément résilient.
